# EUROPEAN PATENT APPLICATION

(11) **EP 1 283 427 A2**
(43) Date of publication of application: **12.02.2003**
(21) Application number: 02017936.2
(22) Date of filing: 09.08.2002
(51) Int. Cl.: G01V 8/20

(54) **Multi-beam photoelectric safeguard system**

(30) Priority: 09.08.2001 JP 2001241619
(71) Applicant: Keyence Corporation, Osaka-shi, Osaka 533-8555 (JP)
(72) Inventor: Kudo, Motohiro, c/oKeyence Corporation, Osaka-shi, Osaka 533-8555 (JP); Inoue, Tetsu, c/oKeyence Corporation, Osaka-shi, Osaka 533-8555 (JP)
(74) Representative: Zimmermann, Gerd Heinrich

(57) **Abstract**

A multi-beam photoelectric safeguard system (100) includes a sub light detecting device (14) and a sub light emitting device (13) that are placed in a parallel, spaced-apart relationship inside a plane extending between a main light emitting device (11) and a main light detecting device (12). When the system is used to make a light curtain for a machine having a projecting portion that significantly projects outwardly from the main part of the machine, the sub light detecting device and the sub light emitting device are disposed adjacent to the opposite sides of the projecting portion to receive light beams from the main light emitting device and to emit light beams toward the main light detecting device. Thus the system makes a light curtain extending all around the projecting portion without leaving any zones on the opposite sides of the projecting portion within the plane of the light curtain that cannot be detected.

## Description

This invention relates to a multi-beam photoelectric safeguard system.

Multi-beam photoelectric safeguard systems, comprising a light emitting device including a plurality of aligned light emitting elements and a light detecting device including a plurality of corresponding photodetectors as one unit, are commonly employed to detect the intrusion of an optical obstacle in a wide detection area. Multi-beam photoelectric safeguard systems are typically used to make protective fences, i.e. light curtains, along boundaries of prohibited areas where machine tools, punching machines, pressing machines, casting machines, automatic controllers and the like. Thus, if a part of the body of an operator, for example, intrudes into such a prohibited area, the system detects the intrusion and immediately stops the machine and/or gives a warning signal.

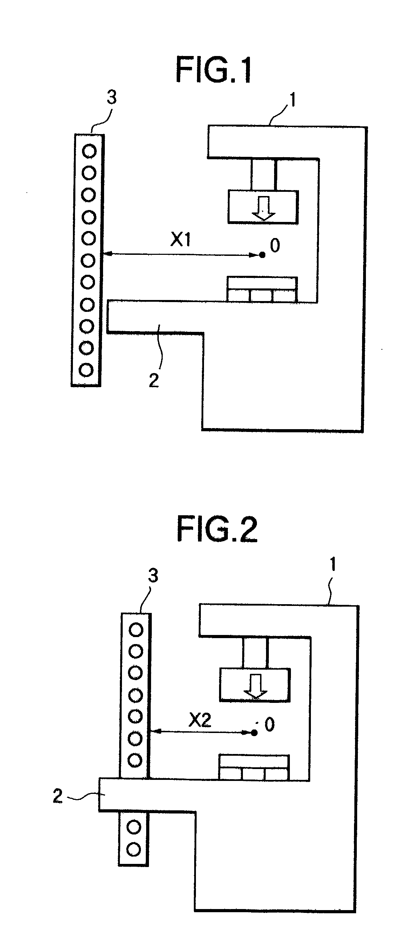

Regarding relative placement between the light emitting device and the light detecting device of a multi-beam photoelectric safeguard system, in case a machine 1 such as a press as shown in Fig. 1 includes a projecting portion 2 projecting toward the operator, one of solutions is to place the safeguard system 3 in a position beyond the proximal end of the projecting portion 2 where the safeguard system does not interfere with the projection 2 at all.

However, this placement increases the horizontal distance X1 from the work center O of the machine 1 to the safeguard system 3 (light curtain). Hence this increases the total area for installment of the press and the area for its safeguard system. Therefore, this placement decreases the working efficiency of the press.

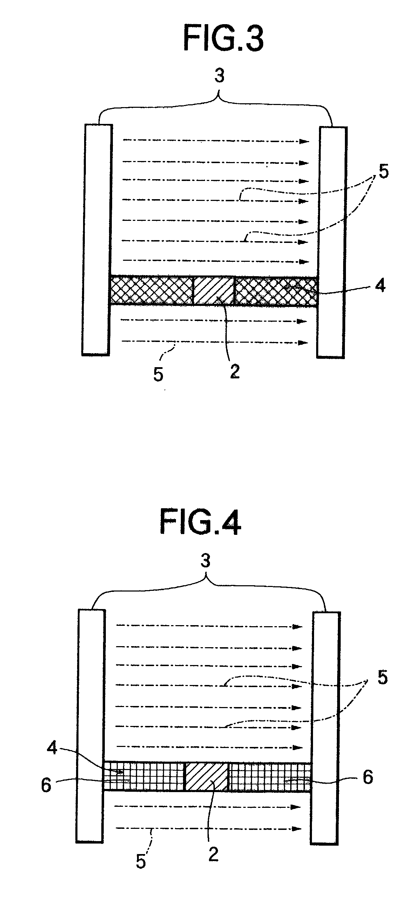

In case the machine 1 includes the projecting portion 2 that projects toward the operator, another solution is to place the safeguard system 3 as shown in Figs. 2 and 3. In the conventional example shown here, the safeguard system 3 (light curtain) is positioned close to the machine 1, and rearranged beforehand to exclude from effective detection the zone 4 encountering the projecting portion 2. In other words, the zone 4 where some of the optical axes 5 forming the light curtain are optically blocked by the projecting portion 2 is excluded from effective detection. That is, a blanking function, which excludes the zone 4 encountering the projection 2 as a non-detection area beforehand, permits the safeguard system 3 (light curtain) to be placed even at a position where it interferes with the projecting portion 2.

In this configuration, since the protective fence, i.e. light curtain, can be positioned closely to the machine 1 (X2<X1) so as to keep a safe distance as small as possible with respect to the machine 1, the working efficiency can be improved.

However, this approach relies on invalidating some of the optical axes 5 in zone 4 and it excludes the full extension of zone 4 from detection, including at least one section on at least one side of the projecting portion. However, there is a possibility that an optical obstacle intrudes into the prohibited area through that section. To compensate for this defect, another safeguard measure has to be employed, such as, for example, covering each such section of zone 4 with a physical fence 6 such as a metal plate or net as shown in Fig. 4.

Japanese Patent Laid-Open Publication No. S63-43099 proposes a multi-beam photoelectric safeguard system contemplating the existence of a projecting portion as discussed above. The safeguard system disclosed in this publication is comprised of a pair of light emitting and detecting devices. Each device includes a plurality of light emitting elements and complementary photodetectors, respectively, and a pair of reflection mirrors. The mirrors are disposed adjacent to the projecting portion so that, in the zone encountering the projecting portion, a light curtain is made at one or opposite sides of the projecting portion. This is done by reflecting light beams from the light emitting and detecting devices at the reflection mirrors and receiving the reflected light beams at the same light emitting and detecting devices.

With the safeguard system taught by this publication, however, it is difficult to adjust the optical axes between the light emitting and detecting devices as well as the optical alignment of respective light emitting elements and photodetectors with their associated reflection mirrors. The difficulty becomes more significant when the optical axes are closely arrayed. Furthermore, since each of the light emitting and detecting devices has to include light emitting elements or photodetectors for emitting or detecting light beams to and from the reflection mirrors, inevitably the light emitting and detecting devices become bulky.

The present invention intends to overcome at least some of the above problems. The object is solved by the multi-beam photoelectric safeguard system according to independent claims 1, 8, 10, 13, 16, 17, 18, 19 and the methods for detecting an optical obstacle according to independent claims 20, 21 and 22.
Further advantages, features, aspects and details of the invention are evident from the dependent claims, the description and the accompanying drawings.
The present invention generally relates to a multi-beam photoelectric system. In particular, it relates to a multi-beam photoelectric safeguard system.
It is therefore an object of the invention to provide a multi-beam photoelectric safeguard system capable of positioning a light curtain made of closely arrayed optical axes very close to a machine or equipment such as a press, which requires the safeguard system.

A further object of the invention is to provide a multi-beam photoelectric safeguard system capable of making a light curtain without an invalidated zone even when used for a machine or equipment such as a press, which requires the safeguard system and includes a portion projecting toward the operator.

A still further object of the invention is to provide a multi-beam photoelectric safeguard system capable of making a light curtain without an invalidated area even when used for a machine or equipment such as a press, which requires the safeguard system and includes a portion projecting toward the operator, without complicating the system.

A yet further object of the invention is to provide a multi-beam photoelectric safeguard system in which a basic operational sequence of the main light emitting and detecting devices can be easily modified to provide another operational sequence for both the main and sub light emitting and detecting devices altogether when the sub light emitting and detecting devices are added to the main light emitting and detecting devices.

Those objects of the invention can be accomplished by the various aspects of the invention described herein.

According to an aspect of the invention, there is provided a multi-beam photoelectric safeguard system for outputting a blockage signal toward an external device, the blockage signal indicates any optical blockage of light beams forming a light curtain by intrusion of an optical obstacle into the light curtain, comprising:
a main light emitting device having a plurality of light emitting elements aligned in an array at equal intervals;
a main light detecting device having a plurality of photodetectors equal in number to said plurality of light emitting elements and aligned in an array at equal intervals;
a sub light detecting device disposed between said main light emitting device and said main light detecting device, and having at least one light photodetector capable of detecting a light beam from said main light emitting device;
a sub light emitting device disposed between said main light emitting device and said main light detecting device, and having at least one light emitting element capable of emitting light toward said main light detecting device;
the light curtain including a main detection area defined between said main light emitting device and said main light detecting device to detect any optical obstacle therein, a first sub detection area defined between said main light emitting device and said sub light detecting device to detect any optical obstacle therein, and a second sub detection area defined between said sub light emitting device and said main light detecting device to detect any optical obstacle therein; and
a blockage signal indicative of optical blockage of any of the light beams being output toward said external device when any optical obstacle intrudes in at least one of the main detection area, the first sub detection area and the second sub detection area.

According to a further aspect of the invention, there is provided a multi-beam photoelectric safeguard system for outputting a blockage signal toward an external device, the blockage signal indicating any optical blockage that is detected in a light curtain including light beams along multiple optical axes, comprising:
a main light emitting device having a plurality of light emitting elements aligned in an array at equal intervals;
a main light detecting device disposed in an opposed relation with said main light emitting device, and having a plurality of photodetectors equal in number to said light emitting elements and aligned in an array at equal intervals;
a sub light detecting device disposed in an opposed relation with said main light emitting device, and having at least one photodetector capable of detecting a light beam from said main light emitting device;
a sub light emitting device disposed in an opposed relation with said main light detecting device on an optical axis common to that where said sub light detecting device is disposed, and having at least one light emitting element capable of emitting a light beam toward said main light detecting device;
the light curtain including a main detection area defined between said main light emitting device and said main light detecting device to detect any optical obstacle therein, a first sub detection area defined between said main light emitting device and said sub light detecting device to detect any optical obstacle therein, and a second sub detection area defined between said sub light emitting device and said main light detecting device to detect any optical obstacle therein; and
a signal processing circuit for detecting blockage of at least one of the light beams forming the light curtain and for outputting a blockage signal toward said external device indicative of the blockage.

According to a still further aspect of the invention, there is provided a multi-beam photoelectric safeguard system for supplying a blockage signal toward an external device upon an optical blockage of at least one light beam forming a multi-beam light curtain, comprising:
a main light emitting device having a plurality of light emitting elements aligned at equal intervals;
a main light detecting device having a plurality of photodetectors equal in number to said light emitting elements and aligned at equal intervals;
a sub light detecting device disposed on a plane common to the light curtain, and having at least one light photodetectors capable of detecting a light beam from said main light emitting device;
a sub light emitting device disposed on a plane common to the light curtain, and having at least one light emitting element capable of emitting a light beam toward said main light detecting device;
the light curtain including a main detection area defined between said main light emitting device and said main light detecting device to detect any optical obstacle therein, a first sub detection area defined between said main light emitting device and said sub light detecting device to detect any optical obstacle therein, and a second sub detection area defined between said sub light emitting device and said main light detecting device to detect any optical obstacle therein; and
a control means for controlling said main light emitting device and said main light detecting device according to a basic operational sequence to selectively activate associated light emitting elements and photodetectors at predetermined regular intervals for a predetermined duration of time, said control means modifying said basic operational sequence for controlling said main light emitting device and said main light detecting device into a modified operational sequence by getting information about at least one optical axis forming the first and second sub detection areas, said control means adding timings for operating said sub light detecting device and said sub light emitting device, and controlling said main light emitting device, said main light detecting device, said sub light detecting device and said sub light emitting device according to the modified operational sequence.

In any of those aspects of the invention, in case the light curtain is made for a pressing machine including a portion projecting toward the operator, the sub light emitting device and the sub light detecting device are placed at opposite sides of the projecting portion to make sub detection areas adjacent to the projecting portion of the press on the common optical axes. In this manner, the light curtain can be produced very close to the press all around its projecting portions without the need for making any invalidated zone.

Unlike the multi-beam photoelectric safeguard system disclosed by Japanese Patent Laid-Open Publication No. S63-43099, the multi-beam photoelectric safeguard system according to the first aspect of the invention does not use reflection mirrors, and therefore it can easily produce a high-density light curtain made by closely arrayed light axes.

In the multi-beam photoelectric safeguard system according to the further aspect of the invention, the main light detecting device, or the main light emitting device, includes the signal processing circuit for detecting any optical blockage, the output circuit feeding the external device inside, and it carries out generation of the optical blockage signal and delivery thereof to the external device under total unitary control. Therefore, the sub light detecting device and/or sub light emitting device need not include either its own signal processing circuit for detecting and confirming any optical blockage or its own output circuit for delivery of the signal to the external device. Therefore, the safeguard system can be simplified.

These and other objects and advantages of the invention will be apparent from the following description of embodiments of the invention taken in conjunction with the accompanying drawings, wherein
Fig. 1 is a schematic side view diagram illustrating a conventional multi-beam photoelectric safeguard system to explain installation thereof;
Fig. 2 is a schematic side view diagram of a conventional multi-beam photoelectric safeguard system to explain another installation method;
Fig. 3 is a schematic front view diagram illustrating the conventional multi-beam photoelectric safeguard system of Fig. 2;
Fig. 4 is a schematic front view diagram illustrating a conventional system covering a non-detectable area with a metal net or the like;
Fig. 5 is a schematic diagram showing the entire configuration of a multi-beam photoelectric safeguard system according to a first embodiment of the present invention;
Fig. 6 is a schematic side view diagram illustrating the safeguard system according to the embodiment of Fig. 5;
Fig. 7 is a schematic diagram for explaining a main detection area defined between a main light emitting device and a main light detecting device, a first sub detection area defined between the main light emitting device and a sub light detecting device, and a second sub area defined between a sub light emitting device and the main light detecting device;
Fig. 8 is a schematic perspective view diagram showing the entire configuration of the multi-beam photoelectric safeguard system according to the first embodiment;
Fig. 9 is a block diagram of the main light emitting device and the main light detecting device describing the basic units of the multi-beam photoelectric safeguard system according to the first embodiment;
Fig. 10 is a block diagram of the sub light detecting device involved in the safeguard system according to the first embodiment;
Fig. 11 is a block diagram of the sub light emitting device involved in the safeguard system according to the first embodiment;
Fig. 12 is a diagram explaining a basic operational sequence incorporated in the main light detecting device;
Fig. 13 is a diagram for explaining an operational sequence of the safeguard system according to the first embodiment;
Fig. 14 is a flowchart for explaining the processing steps in a teaching mode for generating a multi-detection sequence;
Fig. 15 is a schematic diagram for explaining the situation of an intrusion of an optical obstacle in the main detection area;
Fig. 16 is a schematic diagram for explaining the situation of an intrusion of an optical obstacle in the first sub detection area;
Fig. 17 is a schematic diagram for explaining the situation of an intrusion of an optical obstacle in the second sub detection area;
Fig. 18 is a schematic diagram illustrating the entire configuration of a multi-beam photoelectric safeguard system according to a second embodiment;

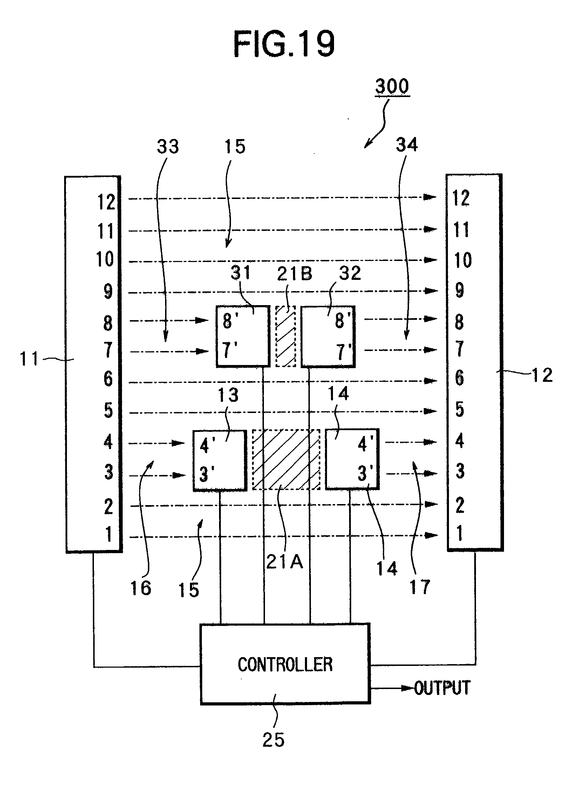

Fig. 19 is a schematic diagram for explaining a main detection area defined between a main light emitting device and a main light detecting device, a first sub detection area defined between the main light emitting device and a first sub light detecting device, a second sub detection area defined between a first sub light emitting device and the main light detecting device, a third sub detection area defined between the main light emitting device and a second sub light detecting device, and a fourth sub detection area defined between a second sub light emitting device and the main light detecting device in the third embodiment;
Fig. 20 is a schematic side view diagram illustrating a safeguard system according to a third embodiment;
Fig. 21 is a schematic diagram for explaining an operational sequence of the safeguard system according to the third embodiment; and
Fig. 22 is a schematic diagram for explaining an operational sequence of a multi-beam photoelectric safeguard system according to a fourth embodiment.

The preferred embodiments of the invention will now be explained below with reference to the drawings.

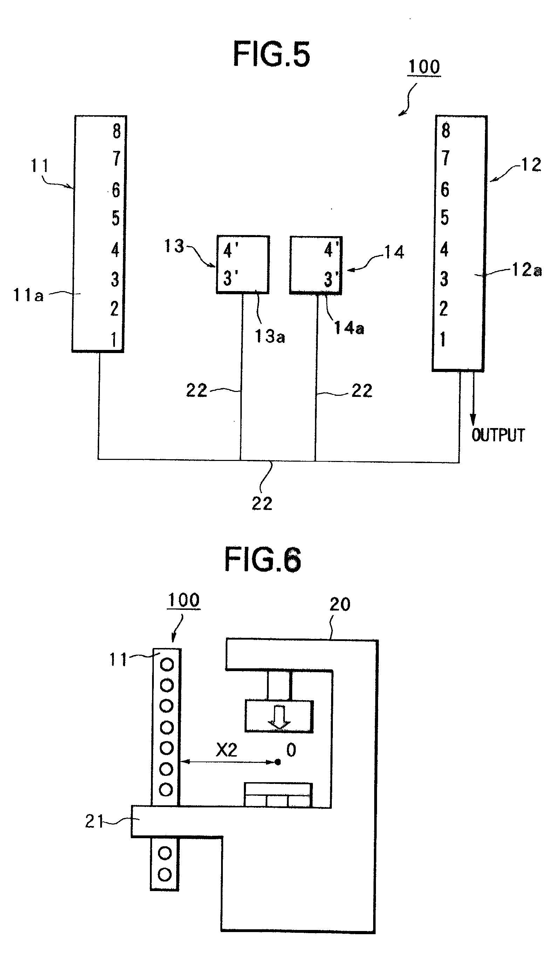

### First Embodiment (Figs. 5 through 17)

Figs. 5 through 17 illustrate the multi-beam photoelectric safeguard system according to the first embodiment of the invention. Referring to Fig. 5, the multi-beam photoelectric safeguard system 100 includes a main light emitting device 11 and a complementary main light detecting device 12 as the basic units thereof. Both the main light emitting device 11 and the main light detecting device constituting the basic units can be extended by connecting one or more additional such devices in series or in parallel, respectively. The safeguard system 100 further includes a sub light detecting device 13 complementary with an opposed section of the main light emitting device 11, and a sub light emitting device 14 complementary with an opposed section of the main light detecting device 12. The sub light detecting device 13 and sub light emitting device 14 may be prepared as optionally available devices.

The main light emitting device 11 has an elongate case 11a. A predetermined number of light emitting elements are arranged in the case 11a at regular intervals in an array along the lengthwise (longitudinal) direction thereof. Eight light emitting elements are schematically shown in this embodiment by the numbers 1-8. These light emitting elements may be light emitting diodes (LEDs). The interval of the light emitting elements may be 20 mm, for example. However, this interval may either be longer or shorter.

The main light detecting device 12 also has an elongate case 12a. A predetermined number of photodetectors, equal in number to the light emitting elements, are arranged in the case 12a at regular intervals. Eight photodetectors are schematically shown in this embodiment by the numbers 1-8. The interval of the adjacent photodetectors is equal to that of the light emitting elements. If the interval of the light emitting elements is 20 mm, then the interval of the photodetectors is also 20 mm.

The sub light detecting device 13 has a relatively short case 13a. There is at least one light photodetector arranged in the case 13a in an array. The number of photodetectors is less than the number of light emitting elements of the main light emitting device 11 or the number of photodetectors of the main light detecting device 12. In this embodiment, two photodetectors are provided. Their interval is equal to that of the light emitting elements of the main light emitting device 11. Thus, if the interval of the light emitting elements of the main light emitting device is 20 mm, the interval of the photodetectors of the sub light detecting device 13 is also 20 mm.

The sub light emitting device 14 includes a relatively short case 14a. There is at least one light emitting element, equal in number to the photodetectors of the sub light detecting device 13, arranged in the case 14a in an array. Here again, LEDs are typically used as the light emitting elements. Two photodetectors are provided in this embodiment. Their interval is equal to that of the photodetectors of the main light detecting device 12. Thus, if the interval of the photodetectors of the main light detecting device 12 is 20 mm, the interval of the light emitting elements of the sub light emitting device 14 is also 20 mm.

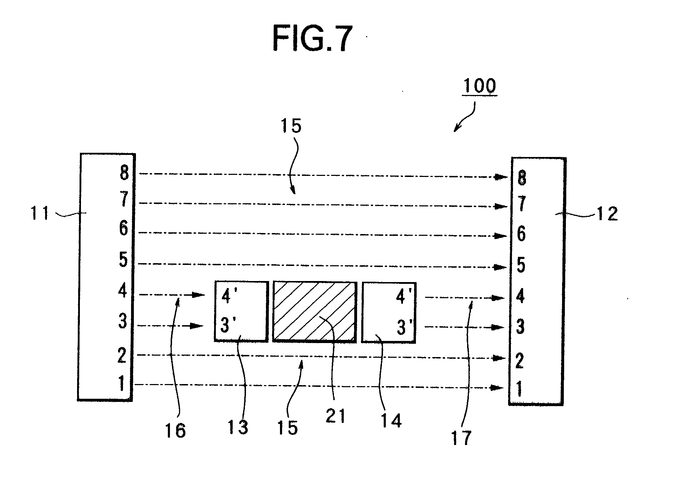

The numbers 1 to 8 in Fig. 5 represent the various optical axes between the main light emitting device 11 and the main light detecting device 12. As shown in Fig. 5, the main light emitting device 11 and the main light detecting device 12 are placed in an opposed relation on a common plane to emit and receive light beams that form a light curtain (Fig. 7). The area where the light beams run between the light emitting and detecting devices 11, 12 is herein named the main detection area 15. As shown in Fig. 7, the sub light detecting device 13 and the sub light emitting device 14 are placed to interrupt one or more optical axes between the main light emitting and detecting devices 11, 12 to define the first sub detection area 16 between an opposed section of the main light emitting device 11 and the sub light detecting device 13, and the second sub detection area 17 between the sub light emitting device 14 and an opposed section of the main light detecting device 12.

More specifically, the sub light detecting device 13 is placed close to one side surface of a projecting portion 21 that projects toward an operator of a machine 20. The sub light detecting device 13 is opposed to the main light emitting device 11 to define the first sub detection area 16 together with opposed light emitting elements of the main light emitting device 11. Likewise, the sub light emitting device 14 is placed close to the opposite side surface of the projecting portion 21 and opposed to the main light detecting device 12 to define the second sub detection area 17 together with opposed photodetectors of the main light detecting device 12.

As a result, light beams traveling in the main detection area 15 and the sub detection areas 16, 17 form a light curtain all around the non-detection area defined between the sub light detecting and emitting devices 13, 14 and occupied by the projecting portion 21 of the press 20.

Figs. 5 and 7 illustrate the sub light detecting device 13 and the sub light emitting device 14 disposed to partly take over at least one of the optical axes between the main light emitting and detecting devices 11, 12 at opposite sides of the non-detection area defined between the sub light detecting and emitting devices 13, 14. In these drawings, the sub light detecting and emitting devices 13, 14 are positioned to partly take over the third and fourth optical axes; however, their position relative to the optical axes is determined, depending on the position of the projecting portion 21. The number of pairs of photodetectors in the sub light detecting device 13 and the number of pairs of light emitting elements in the sub light emitting device 14 are determined in accordance with the size of the projecting portion 21 or other obstacle to equally compensate for the number of optical axes between the main light emitting and detecting devices 11, 12, which will be optically blocked by the projecting portion 21.

The main light emitting device 11, main light detecting device 12, sub light detecting device 13 and sub light emitting device 14 are connected altogether via a communication line or signal line 22.

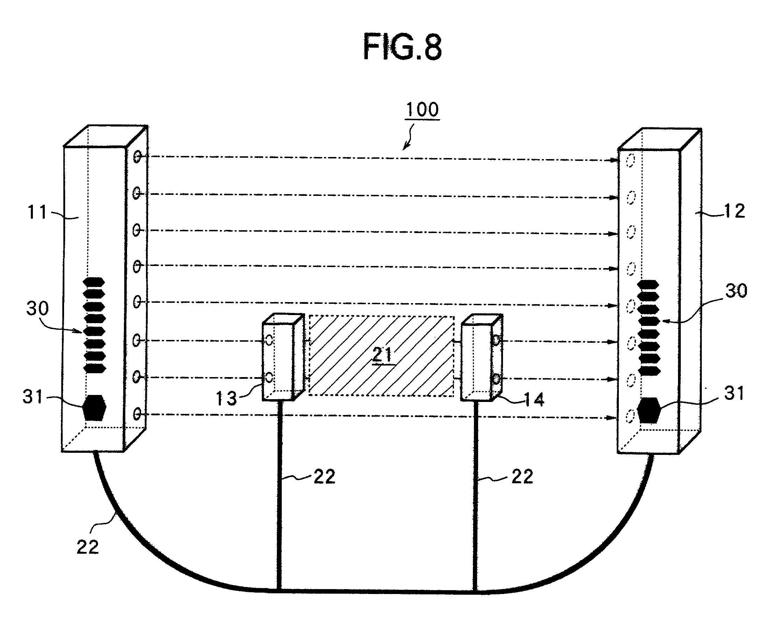

Referring to Fig. 8, the main light emitting and detecting devices 11, 12 each include an optical axis adjustment display 30 composed of a plurality of light emitting diode (LED) segments vertically aligned side by side. Here dichromatic light emitting diodes are used that can emit, for example, red and green light. The main light emitting device 11 and the main light detecting device 12 each also has an output display such as ON/OFF light using a LED that normally emits green light, for example. The display otherwise emits red light, for example, when any unexpected optical axes are blocked or detected, or when the system itself fails, for example.

The optical axis adjustment display 30 composed of a plurality of light emitting diode segments may be used in any appropriate mode of display. Typically, when all beams of all optical axes enter into the main light detecting device 12, all LED segments may emit green light. Then, if part of the optical axes are blocked, a number of segments proportional to the blocked optical axes, i.e. proportional to the light beams failing to reach the main light emitting device 12, may emit red light sequentially from the bottom one, and a number of segments corresponding to the number of the blocked optical axes turn off from the top one. That is, the optical axis adjustment display 30 displays a bar type representation in which a red bar extends upward as the ratio of incident beams becomes higher, or in response to the degree of optical axis adjustment. This is typically for facilitating an operator to confirm accurate alignment between the light emitting elements of the light emitting device 11 and the photodetectors of the light detecting device 12 when installing the safeguard system 100 on site.

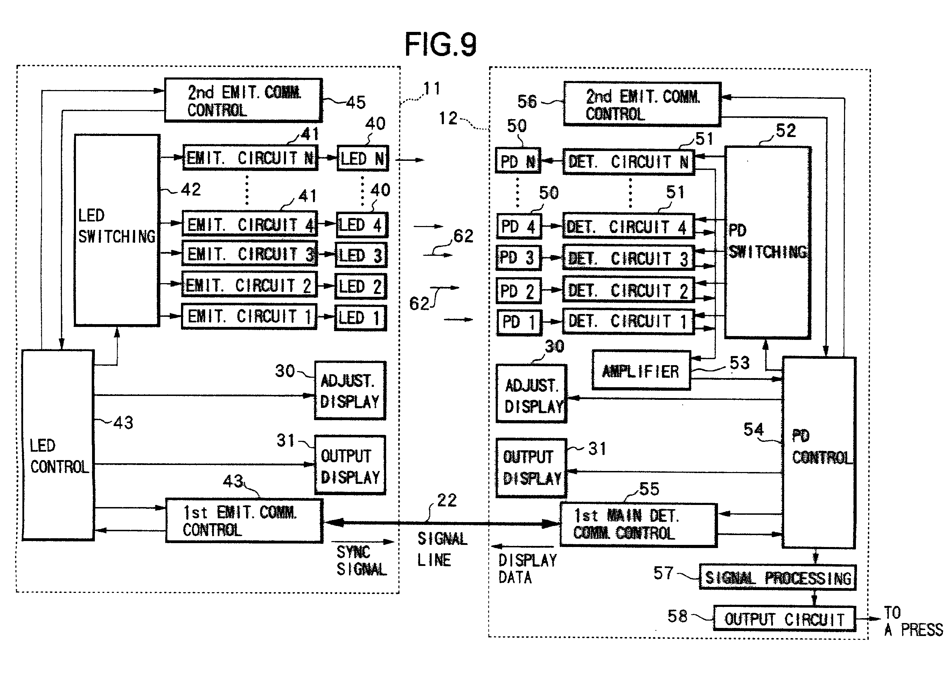

Referring to Fig. 9, the main light emitting device 11 includes N emitter circuits 41 (eight, for example) for driving N LEDs 40 used as light emitting elements, an LED switching circuit (optical axis switching circuit) 42 for scanning these light emitting circuits 41 in a time-sharing manner, and an LED control circuit 43 for totally controlling the main light emitting device 11. The LED control circuit 43 outputs a control signal to the optical axis adjustment display 30 and the output display 31.

The main light emitting device 11 further includes a first emitter communication control circuit 44 for controlling bi-directional signal exchange of the main light emitting device 11 with the main light detecting device 12, sub light detecting device 13, etc., and a second emitter communication control circuit 45 for controlling communication between the main light emitting device 11 and a further main light emitting device (not shown) that may be additionally connected in series thereto for making a larger light curtain.

On the other hand, the main light detecting device 12 has N detector circuits 51 (eight, for example) for driving N photodetectors 50, a photodetector switching circuit 52 for scanning these light detecting circuits in a time-sharing manner, an amplifier circuit 53, and a photodetector control circuit 54 for totally controlling the main light detecting device 12. The photodetector control circuit 54 outputs a control signal to the optical axis adjustment display 30 and the output display 31.

The main light detecting device 12 further includes a first detector communication control circuit 55 for controlling bi-directional signal exchange of the main light detecting device 12 with the main light emitting device 11, sub light detecting device 13, etc., and a second detector communication control circuit 56 for controlling communication between the main light detecting device 12 and a further main light detecting device (not shown) that may be additionally connected in series thereto to make a larger light curtain.

Furthermore, the main light detecting device 12 includes a signal processing circuit 57. The circuit 57 is typically configured to always be fed by the photodetector control circuit 54 with signals indicating whether light beams of respective optical axes have been normally detected by respective photodetectors or not, and to process the signals accordingly. When the signal processing circuit detects from those signals that an optical blockage has occurred two or three times within a predetermined period of time, it supplies an OFF signal through the output circuit 58 to an external device (not shown) in order to stop the press 20 immediately. The external device can be a control panel of the press 20 or an alarm lamp associated with the light curtain made by the main light emitting device 11 and the main light detecting device 12.

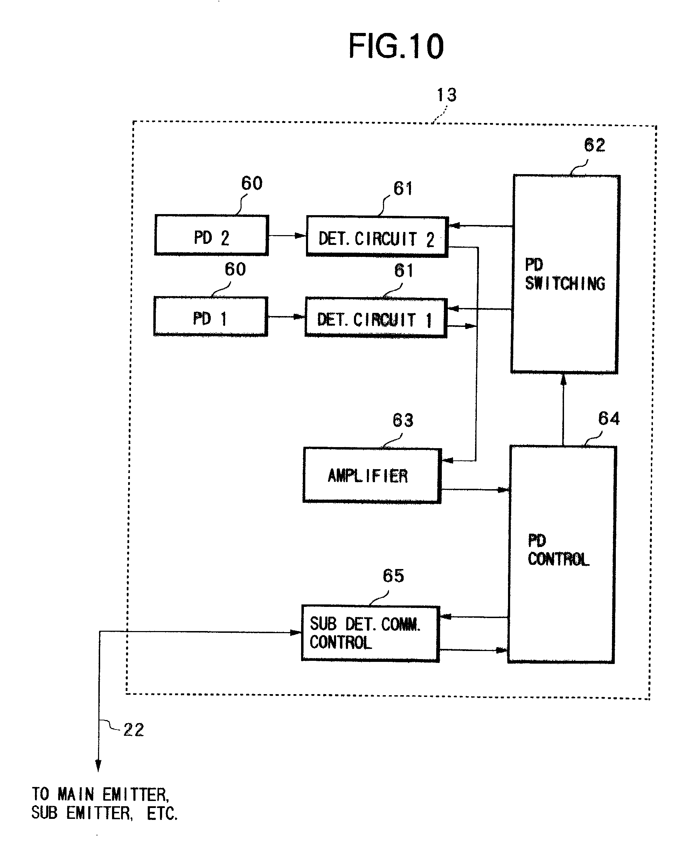

The sub light detecting device 13, as best shown in Fig. 10, includes two detector circuits 61 for driving two photodetectors 60, as shown in this embodiment. The sub light detecting device 13 also includes a photodetector switching circuit 62 for scanning these detector circuits in a time-sharing manner, an amplifier circuit 63, a photodetector control circuit 64 for totally controlling the sub light detecting device 13, and a sub detector communication control circuit 65 for controlling the bi-directional signal exchange of the sub light detecting device 13 with the main light emitting device 11, sub light emitting device 14, etc.

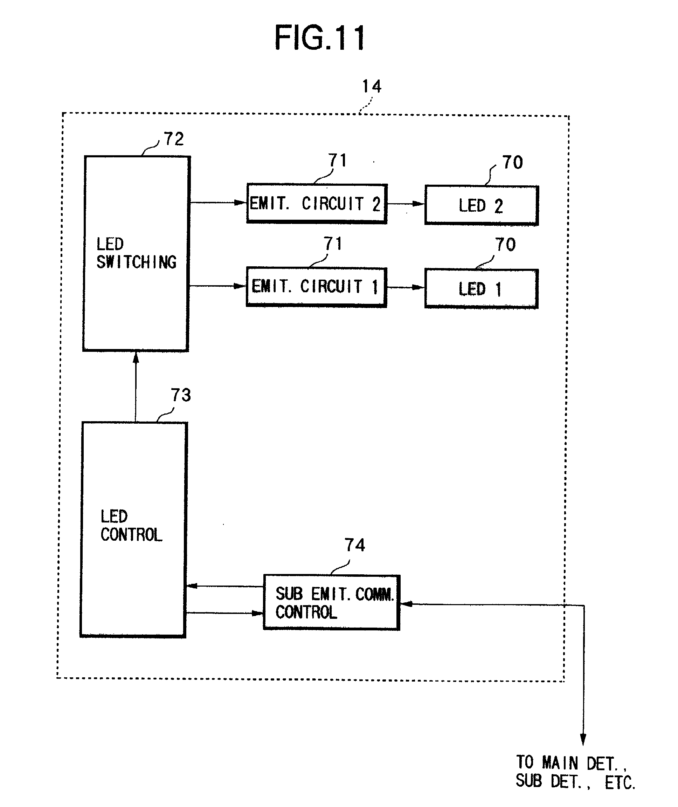

The sub light emitting device 14, as best shown in Fig. 11, includes N emitter circuits 71 for driving two LEDs 70 used as light emitting elements, an LED switching circuit (optical axis switching circuit) 72 for scanning these emitter circuits 71 in a time-sharing manner, and an LED control circuit 73 for totally controlling the sub light emitting device 14. The sub light emitting device 14 also includes a sub emitter communication control circuit 74 for controlling the bi-directional signal exchange of the sub light emitting device 14 with the main light emitting device 12, sub light detecting device 13, etc.

Referring to Fig. 7, in the safeguard system 100, the main detection area 15 is formed by full spans of the first, second and fifth to eighth optical axes between the main light emitting device 11 and the main light detecting device 12. In sectional spans of the third and fourth optical axes, the first sub detection area 16 is formed between the main light emitting device 11 and the sub light detecting device 13, and the second sub detection area 17 is formed between the sub light emitting device 14 and the main light detecting device 12.

The safeguard system 100 is configured to selectively activate LEDs and photodetectors in associated light emitting and detecting devices at predetermined sequential timings, thereby to prevent the photodetectors from receiving light beams of optical axes other than their own optical axes, by exchanging information among the main light emitting device 11, main light receiving device 12, sub light receiving device 13 and sub light detecting device 14 via the signal line or communication line 22.

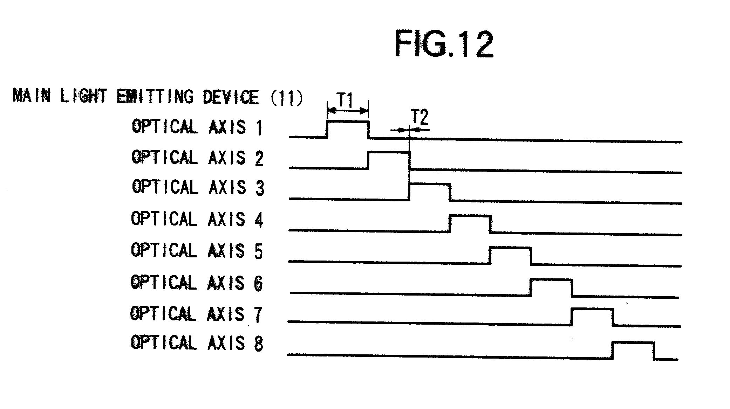

The main light emitting device 11 and the main light detecting device 12 are desirably preset to follow a basic operational sequence shown in Fig. 12. For example, in case the light curtain is formed without using the sub light detecting and emitting devices 13, 14, the main light emitting and detecting devices 11, 12 operate according to the preset basic operational sequence of Fig. 12 (basic operation mode). Although Fig. 12 shows the basic operational sequence of the main light emitting device 11, individual photodetectors of the main light detecting device 12 are activated synchronously with activation of associated individual LEDs of the main light emitting device 11.

It will be appreciated from Fig. 12 that in the basic operational sequence of the main light emitting and detecting devices 11, 12, the activated duration of time (T1) of each LED is constant for all LEDs and photodetectors, and the pause time from deactivation of each LED or photodetector to activation of the next LED or photodetector (T2) is also constant. That is, the respective sets of associated LEDs and photodetectors are sequentially activated periodically for the same duration of time. The basic operational sequence shown in Fig. 12 can be automatically established, taking account of the periods of time T1, T2 and the number of all of the optical axes between the main light emitting and detecting devices 11, 12. This operational sequence may be realized by either an operational program or an electric circuit.

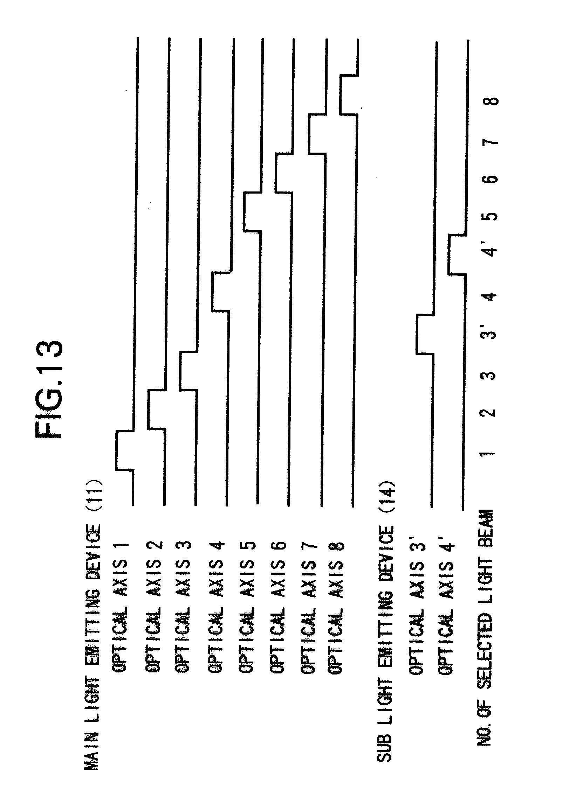

In contrast, Fig. 13 shows an example of a modified operational sequence for use when operations of the sub light detecting device 13 and the sub light emitting device 14 are incorporated. As shown in Fig. 13, just after activating the LED for the third optical axis of the main light emitting device 11, the modified operational sequence activates the LED for the third optical axis of the sub light detecting device 14, while deferring activation of subsequent LEDs for subsequent optical axes. After that, the modified operational sequence activates the LED for the fourth optical axis of the main light emitting device 11 and, just after thereof, activates the associated LED of the sub light emitting device 14, while here again deferring activation of subsequent LEDs for subsequent optical axes.

For installing of the safeguard system 100 on site, the main light emitting device 11 and the light detecting device 12 are positioned in an opposed relation along a plane where the light curtain for the press 20 should spread. As a result, accurate placement of the main light emitting device 11 and the main light detecting device 12 relative to the machine 20 and its projecting portion 21 is completed.

For the purpose of notifying the photodetector control circuit 54 that the safeguard system 100 is currently in the multi-detection operation mode combining operations of the sub light detecting and emitting devices 13, 14, the safeguard system 100 should enter a teaching mode. The operator or user turns on a teaching switch to give such instruction for automatically generating the modified operational sequence for the light emitting and detecting operations in the multi-detection operation mode. The teaching switch may be provided on one or both of the main light emitting device 11 and the main light detecting device 12.

Responsively, the main light emitting device 11 starts emission of light at similar timings to those shown in Fig. 12. The instruction through the teaching switch is delivered from the photodetector control circuit 54 via the communication line or signal line 22 and it notifies of the teaching mode for generation of the multi-detection sequence to the LED control circuit 43 via the communication line or signal line 22.

Once all LEDs complete emission of light, the photodetector control circuit 54 recognizes that the projecting portion 21 blocks the third and fourth optical axes. In response, the photodetector control circuit 54 makes a first blank in the basic operational sequence of Fig. 12. A blank is a length of time totaling the time T1 and the time T2 that is required for emission from one of the LEDs of the sub light emitting device 14 for the third optical axis (illustrated as the optical axis No. 3' in Fig. 13) after the emission timing of one of LEDs of the main light emitting device 11 for the third axis (illustrated as the optical axis No. 3 in Fig. 13) while delaying emission timings of LEDs for subsequent optical axes. Additionally, the photodetector control circuit 54 makes a second blank required for emission from the other LED of the sub light emitting device 14 for the fourth optical axis (illustrated as the optical axis No. 4' in Fig. 13) after the emission timing of one of LEDs of the main light emitting device 11 for the fourth axis (illustrated as the optical axis No. 4 in Fig. 13) while delaying emission timings of LEDs for subsequent optical axes. Furthermore, the photodetector control circuit 54 incorporates timings for emission from the sub light emitting device 14 in the first and second blanks. In this manner, the modified operational sequence shown in Fig. 13 capable of activating the sub light emitting device 14 in the first and second blanks is automatically established by the photodetector control circuit 54.

In the configuration of the safeguard system 100 explained above, the photodetector control circuit 54, that can be regarded as the CPU of the main light emitting device 12, recognizes the ON state of the teaching switch for generation of the multi-detection sequence. The photodetector control circuit 54 then automatically generates the modified operational sequence (Fig. 13) in response to detection of a blockage of particular optical axes. However, this function may also be given to the photodetector control circuit 43 of the main light emitting device 11 so that the modified operational sequence can be established by the main light emitting device 11. Alternatively, it is of course also possible that the main light emitting device 11 and the main light detecting device 12 share the function of automatically generating the modified operational sequence.

In the sub light detecting device 13, in response to activation of LEDs for the first and fourth optical axes of the main light emitting device 11, the photodetectors of the corresponding optical axes selectively become active. As for the third and fourth optical axes, the main light detecting device 12 does not follow the activation of the main light emitting device 11 according to the modified operational sequence shown in Fig. 13, but associated photodetectors of the main light detecting device 12 selectively become active synchronously with the activation of the sub light detecting device 14.

Once this initial setting is established, the safeguard system 100 behaves according to the modified operational sequence shown in Fig. 13 (the multi-detection operation mode) where it sequentially executes an optical scan from the first optical axis to the eighth optical axis, and repeats this cycle of optical scanning again from the first optical axis. In each cycle of the optical scan, in regard to the third and fourth optical axes, light beams from the main light emitting device 11 are detected by the sub light detecting device 13, and light beams from the sub light emitting device 14 are detected by the main light detecting device 12.

More specifically, the sub light detecting device 13 is responsive to activation of the LEDs along the third and fourth optical axes of the main light emitting device 11, and corresponding photodetectors of the sub light detecting device 13 are selectively activated. When the sub light detecting device 13 detects a light beam from the main light emitting device 11 at a predetermined timing, it supplies an emission command to the sub light emitting device 14.

When the sub light emitting device 14 is activated in the modified operational sequence (Fig. 13) and it confirms the above emission command from the sub light detecting device 13, one of the LEDs thereof for the corresponding optical axis is activated. With regards to such control of the sub light emitting device 14, it may be configured to emit a light beam solely according to the modified operational sequence of Fig. 13 without the emission command from the sub light detecting device 13, or to emit a light beam solely according to the emission command from the sub light detecting device 13.

In the safeguard system 100, full extensions of six optical axes, namely, the first, second and fifth to eighth optical axes, between the main light emitting device 11 and the main light detecting device 12 form the main detection area 15. Sectional extensions of the third and fourth optical axes between the main light emitting device 11 and the sub light detecting device 13 form the first sub detection area 16. Further, the other sectional extensions of the third and fourth optical axes between the sub light emitting device 14 and the main light detecting device 12 form the second sub detection area 17. Then, light beams traveling in the main and sub detection areas 15, 16, 17 make a light curtain extending all around the projecting portion 21.

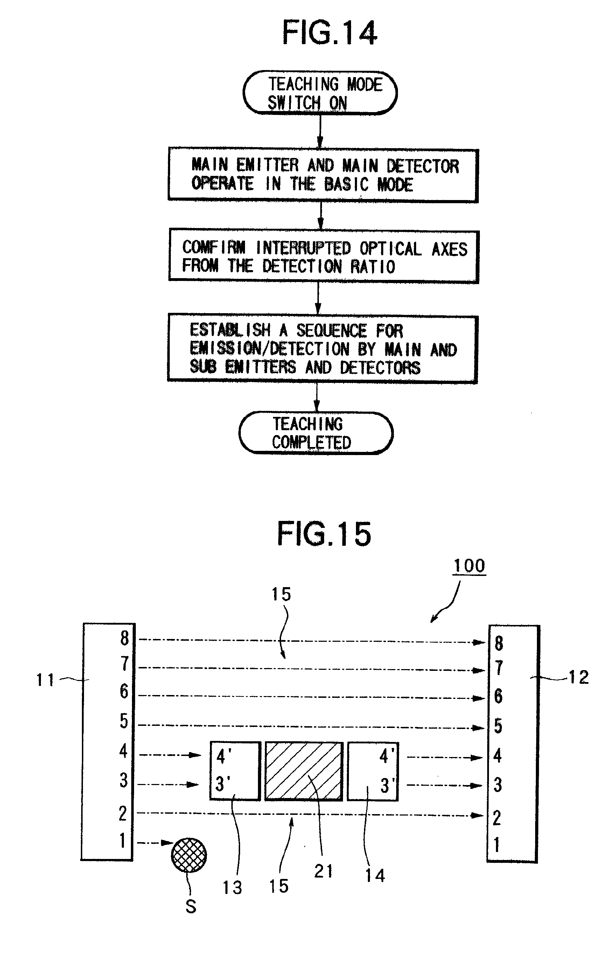

For example, if an optical obstacle, such as part of the body of an operator, blocks the first optical axis in the main detection area 15 formed between the main light emitting device 11 and the main light detecting device 12 as shown in Fig. 15, then the first photodetector of the main light detecting device 12 activated in sync with the first LED of the main light emitting device 11 cannot receive the optical beam. From this fact, it can be immediately acknowledged that optical blockage has occurred. In response, an OFF signal is supplied from the output circuit 58 via the signal processing circuit or detection circuit 57 contained in the main light detecting device 12 to an external circuit, and the press 20 is immediately stopped.

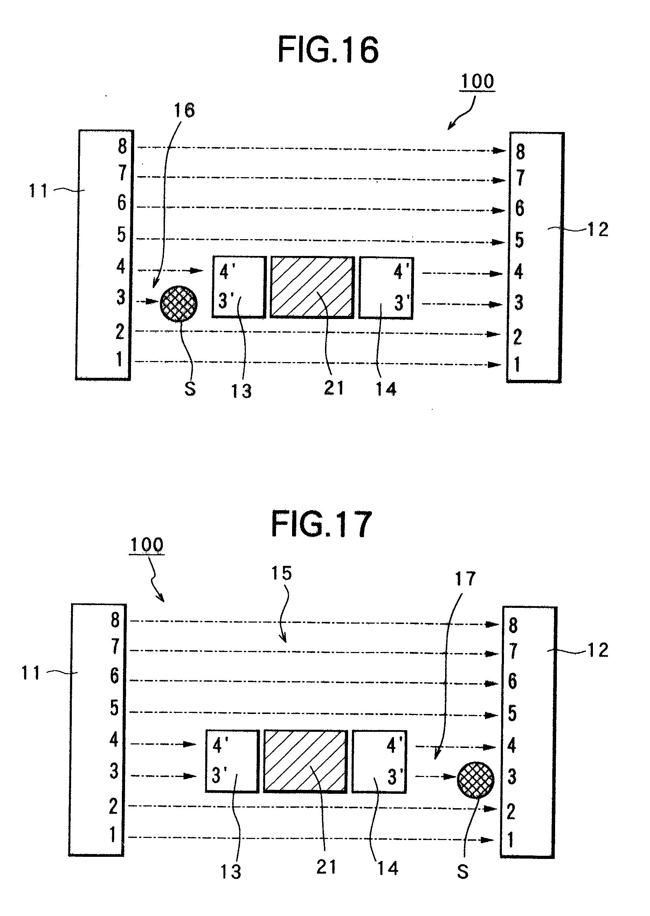

In another example shown in Fig. 16, if the optical obstacle blocks the third optical axis in the first sub detection area 16 formed between the main light emitting device 11 and the sub light detecting device 13, the photodetector in the sub light detecting device 13 activated in sync with the third LED of the main light detecting device 11 cannot receive the optical beam. In response, the LED in the sub light emitting device 14 for the third optical axis does not emit light, and the associated photodetector in the main light detecting device 12 cannot receive any light beam at the predetermined timing. From this fact, it can be immediately acknowledged that optical blockage has occurred. Accordingly, an OFF signal is supplied from the output circuit 58 via the signal processing circuit or detection circuit 57 contained in the main light detecting device 12 to the external device, and the press 20 is immediately stopped.

In the example of Fig. 16, the information that the sub light detecting device 13 did not receive any light beam from the main light emitting device 11 at a predetermined timing may be directly delivered from the sub light detecting device 13 to the main light detecting device 12 and through the signal processing circuit or detection circuit 57 and the output circuit 58 contained in the main light detecting device 12 to the external device to immediately stop the press 20. The information does not need to go through the step of non-emission from the sub light emitting device 14 and non detection by the main light detecting device 12 so that a blockage output is issued based on that information.

In a further example shown in Fig. 17, if the optical obstacle S blocks the third optical axis in the second sub detection area 17 formed between the sub light emitting device 14 and the main light detecting device 12, the photodetector of the main light detecting device 12 cannot receive the optical beam from the LED in the sub light emitting device 14 associated with the third optical axis. From this fact, it is immediately acknowledged that optical blockage has occurred. In response, a blockage signal or OFF signal is output through the signal processing circuit or detection circuit 57 and the output circuit 58 contained in the main light detecting device 12 to the external device, and the press 20 is immediately stopped.

Since the main light emitting device 11, main light detecting device 12, sub light detecting device 13 and sub light emitting device 14 are connected altogether by the communication line or signal line 22, the safeguard system 100 can be readily modified to include the signal processing circuit or detection circuit 57 and the output circuit 58 in the main light emitting device 11. This allows the output of the blockage signal or OFF signal to the external device from the main light emitting device 11.

It will be appreciated from the foregoing explanation that the safeguard system 100 can form a light curtain extending over a plane all around the projecting portion 21 of the press 20. Additionally, according to the safeguard system 100 shown here, since the OFF signal can be output by means of the signal processing circuit 57 and the output circuit 58 contained in either the main light detecting device 12 or main light emitting device 11 toward an external device, the sub light detecting device 13 and the sub light emitting device 14 can be optionally prepared so they do not need to contain the signal processing circuit 57 and the output circuit 58.

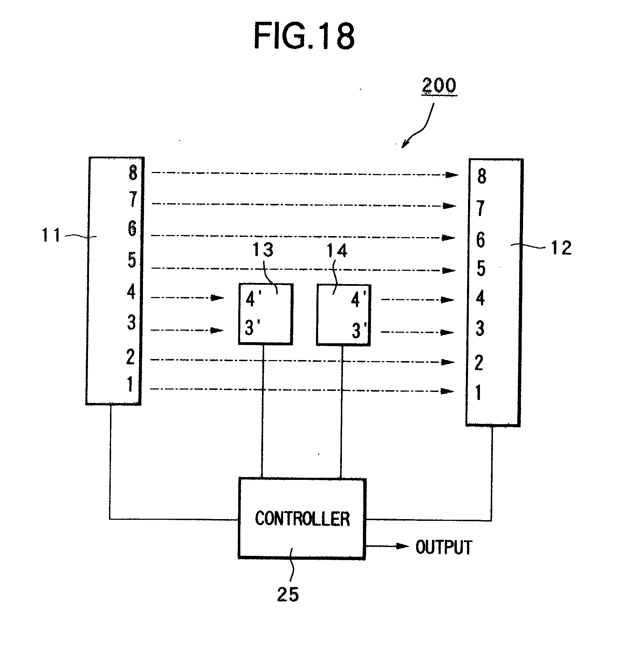

Fig. 18 and the following figures show further embodiments of the invention. In these embodiments, components or parts common or equivalent to those of the first embodiment are labeled with the same reference numerals, and some of them will be omitted from the detailed explanation below. The following explanation will therefore be directed mainly to particular features of these further embodiments.

### Second Embodiment (Fig. 18)

A multi-beam photoelectric safeguard system 200 taken as the second embodiment includes the main light emitting device 11, associated main light detecting device 12, and controller 25 as its basic units. Both the main light emitting device 11 and the main light detecting device can be extended by connecting one or more additional such devices in series or in parallel, respectively. Similar to the first embodiment, the safeguard system 200 further includes the sub light detecting device 13 complementary with a part of the main light emitting device 11, and the sub light emitting device 14 complementary with a part of the main light detecting device 12.

The light receiving and detecting devices such as the main light emitting device 11 contained in the safeguard system 200 are controlled by the controller 25 by the communication line or signal line 22. Any blockage signal from the main light detecting device 12 or sub light detecting device 13 is input to the controller 25, and an ON signal or OFF signal is output from the controller 25 toward an external device.

Also in the safeguard system 200 according to the second embodiment, the sub light detecting device 13 and the sub light emitting device 14 are positioned on the third and fourth optical axes in the illustration of Fig. 18.

Next referring to Fig. 13, the modified operational sequence of the multi-beam photoelectric safeguard system 200 according to the second embodiment is automatically generated in a similar way to that of the first embodiment based on the information about the numbers of the optical axes interrupted by the sub light detecting and emitting devices 13, 14. This information is acquired by the main light detecting device 12 or given via the controller 25 to the main light detecting device 12, and then the main light emitting device 11 and sub light emitting device 14 operate following to the modified operational sequence. For example, the main detection area 15 is formed by full extensions of the first, second and fifth to eighth optical axes between the main light emitting and detecting devices 11, 12. On the third and fourth optical axes, the first sub detection area 16 is formed between the main light emitting device 11 and the sub light detecting device 13, and the second sub detection area 17 is formed between the sub light emitting device 14 and the main light detecting device 12.

For example, if an optical obstacle S intrudes into the third optical axis in the first sub detection area 16 as shown in Fig. 16, the information that a photodetector in the sub light detecting device 13 associated with the third optical axis could not receive any light beam from the main light emitting device 11 is delivered from the sub light detecting device 13 to the controller 25. When the controller 25 confirms a signal indicating this information, it immediately outputs a blockage or OFF signal toward the external device. In this case, it is immaterial whether an emission command is supplied to the sub light emitting device 14 to drive it to emit a light beam or the supply of the emission command to the sub light emitting device 14 is stopped to prohibit emission from the sub light emitting device 14.

The signal processing circuit or detection circuit 57 (Fig. 9) explained in the first embodiment may be provided in the controller 25. Here again, however, it may also be provided in the main light detecting device 12 or main light emitting device 11 as described in connection with the first embodiment.

In a configuration containing the signal processing circuit or detection circuit 57 (Fig. 9) in the main light detecting device 12, if the optical obstacle S intrudes into the first sub detection area 16 and blocks the third optical axis as shown in Fig. 16, the sub light detecting device 13 cannot receive the light beam from the main light emitting device 11. This information is delivered from the sub light detecting device 13 to the controller 25. When the controller 25 acknowledges this information, it can stop the emission command to the sub light emitting device 14.

As a result, the photodetector associated with the third optical axis of the main light detecting device 12 cannot detect any light. This information is delivered to the controller 25 via the signal processing circuit or detection circuit 57 contained in the main light detecting device 12, and the controller 25 outputs a blockage or OFF signal to the external device.

The safeguard system 200 may be modified to include the output circuit 58 (Fig. 9) in the main light detecting device 12 such that the output circuit 58 of the main light detecting device 12 directly outputs the blockage signal to the external device. Alternatively, the output circuit 58 and/or the signal processing circuit 57 may be provided in the main light emitting device 11 so that, when the sub light detecting device 13 or main light detecting device 12 cannot detect light, this information can be sent to the main light emitting device 11 via the controller 25 to have a blockage or OFF signal supplied via the signal processing circuit 57 and the output circuit 58 contained in the main light emitting device 11.

Although the first embodiment is configured to generate the modified operational sequence substantially in the photodetector control circuit 54 of the main light detecting device 12, this function of the photodetector control circuit 54 may be realized by the controller 25. In this case, a teaching switch, not shown, is preferably provided in the controller 25.

### Third Embodiment (Figs. 19 through 21)

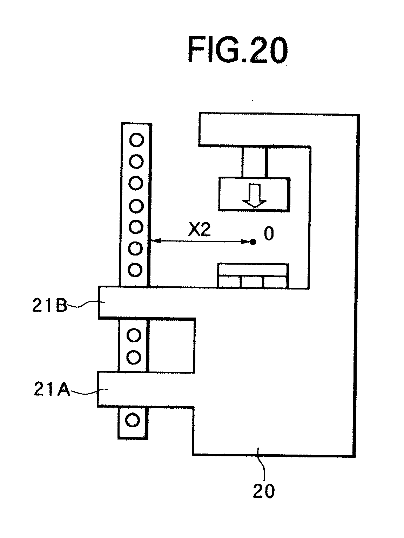

Both the first embodiment and the second embodiment make two sub detection areas 16, 17 by using a set of sub light detecting and emitting devices 13, 14. Of course, two or more sets of the sub light detecting and emitting devices 13, 14 can be used to make more sub detection areas. Referring to Figs. 19 and 20, explanation will be made about an example of making four sub detection areas by using two sets of sub light detecting and emitting devices. The safeguard system according to the third embodiment is shown as being modified from the safeguard system 200 according to the second embodiment; however, the same concept may be combined with the configuration of safety system 100 according to the first embodiment.

The multi-beam photoelectric safeguard system 300 shown here includes a second sub light detecting device 31 and a second sub light emitting device 32 in addition to the first sub light detecting and emitting devices 13, 14 already explained. The second light detecting and emitting devices 31, 32 each include two photodetectors or two LEDs as light emitting elements. The safeguard system 300 is convenient for use with a machine or equipment such as a press 20, which includes two projecting portions 21A, 21B. The main light emitting and detecting devices 11, 12 contained in the safeguard system 300 each include twelve LEDs as light emitting elements or photodetectors aligned in an array. Numbers 1 through 12 shown in Fig. 19 represent the numbers of the optical axes between the main light emitting device 11 and the main light detecting device 12.

It will be appreciated from Fig. 19 that the main light emitting device 11 and the main light detecting device 12 are placed in an opposed relation on a common plane to emit and receive light beams that form a light curtain. The area where optical axes between the main light emitting and detecting devices 11, 12 are not interrupted by any sub light detecting and emitting devices is here again named the main detection area 15. The first sub light detecting device 13 and the first sub light emitting device 14 are placed at opposite sides of the first projecting portion 21A to interrupt one or more of the optical axes between the main light emitting and detecting devices 11, 12 to define the first sub detection area 16 between a part of the main light emitting device 11 and the first sub light detecting device 13 and the second sub detection area 17 between the first sub light emitting device 14 and a part of the main light detecting device 12. The second sub light detecting device 31 and the second sub light emitting device 32 are placed at opposite sides of the second projecting portion 21B to interrupt one or more of the optical axes between the main light emitting and detecting devices 11, 12 to define the third sub detection area 33 between a part of the main light emitting device 11 and the second sub light detecting device 13, and the fourth sub detection area 34 between the second sub light emitting device 14 and a part of the main light detecting device 12.

Fig. 19 illustrates the first sub light detecting emitting devices 13, 14 being disposed to partly take over the third and fourth optical axes; however, their position relative to the optical axes is determined, depending on the position of the first projecting portion 21A. Similarly, the second sub light detecting and emitting devices 31, 32 are shown as being disposed on the seventh and eighth optical axes to define the third and fourth sub detection areas 33, 34 in the seventh and eighth optical axes; however, their position relative to the optical axes is determined, depending on the position of the second projecting portion 21B. That is, the first sub light detecting and emitting devices 13, 14 may be placed in any positions aligned with the first and second projecting portions 21A, 21B of the machine 20. The number of photodetectors and LEDs in the first and second sub light detecting and emitting devices 13, 14, 31, 32 may be determined in accordance with the sizes of the first and second projecting portions 21A, 21B to equally compensate for the number of optical axes between the main light emitting and detecting devices 11, 12, which will be optically blocked by the first and second projecting portions 21A, 21B.

More specifically, in the multi-beam photoelectric safeguard system 300 according to the third embodiment, full extensions of the first, second, fifth, sixth and ninth to twelfth optical axes between the main light emitting device 11 and the main light detecting device 12 form the main detection area 15. As to the third and fourth optical axes, their sectional extensions form the first sub detection area 16 between the main light emitting device 11 and the first sub light detecting device 13, and the second sub detection area 17 between the first sub light emitting device 14 and the main light detecting device 12. As for the seventh and eighth optical axes, their sectional extensions form the third sub detection area 33 between the main light emitting device 11 and the second sub light detecting device 31, and the fourth sub detection area 34 between the second sub light emitting device 32 and the main light detecting device 12. Then, light beams traveling in the main and sub detection areas, 15, 16, 17, 33, 34 make a light curtain extending all around the first and second projecting portions 21A, 21B.

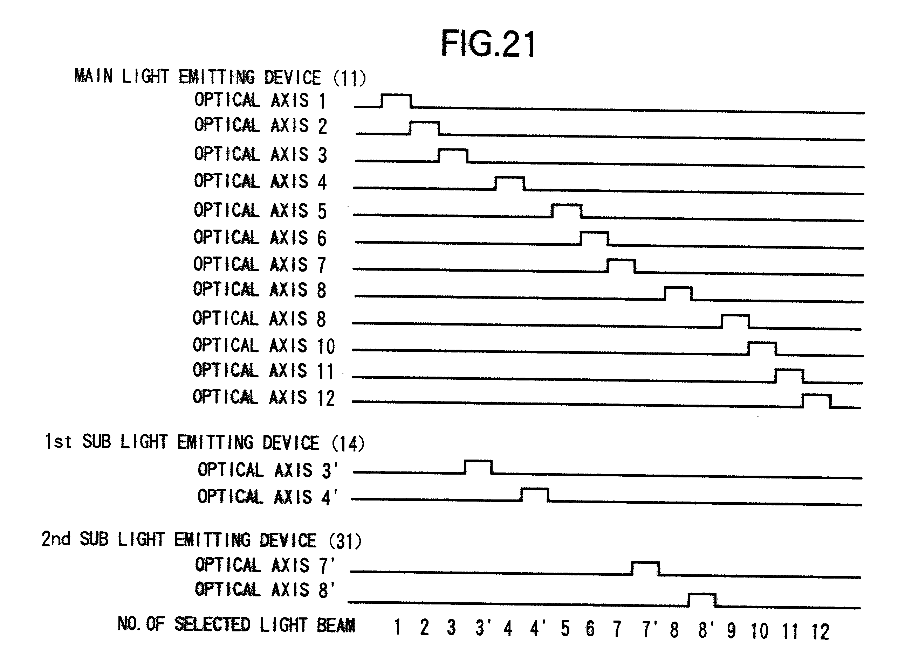

In the safeguard system 300 according to the third embodiment, the basic operational sequence (Fig. 12) for the main light emitting and detecting devices 11, 12 is automatically modified to a multi-detection operational sequence shown in Fig. 21 by supplying the main light detecting device 12 or the controller 25 with numbers of the optical axes interrupted by the first sub light detecting and emitting devices 13, 14, and numbers of the optical axes interrupted by the second sub light detecting and emitting devices 31, 32. In response this makes a first blank after the emission timing of the third optical axis, a second blank after the emission timing of the fourth optical axis, a third blank after the emission timing of the seventh optical axis and a fourth blank after the emission timing of the eighth optical axis; and incorporating emission timings of the first sub light emitting device 14 and the second sub light emitting device 32 in the first and second blanks and in the third and fourth blanks, respectively.

More specifically, in substantially the same manner as the first embodiment, the multi-detection operational sequence is automatically generated. That is, the main light emitting device 11 and the light detecting device 12 are first installed and adjusted into positional alignment with the position for making the light curtain. As a result, accurate positioning of the main light emitting device 11 and the main light detecting device 12 relative to the projecting portions 21A, 21B of the machine 20 is achieved.

After that, for the purpose of notifying the photodetector control circuit 54 or controller 25 that the safeguard system 300 is currently in the multi-detection operation mode combining the second sub light detecting and emitting devices 31, 32 and the safeguard system 300 should enter in a teaching mode. The teaching mode automatically generates the multi-detection operational sequence that is the light emitting operation in the multi-detection operation mode. The operator or user turns on a teaching switch, not shown, to enter the teaching mode. The teaching switch may be provided on at least one of the main light emitting device 11 and the main light detecting device 12. In case the controller is configured to substantially control the light emitting and detecting devices contained in the system 300, the teaching switch is preferably provided on the controller 25.

Initially, the main light emitting device 11 starts emission of light at the same timings as those shown in Fig. 12. The instruction through the teaching switch is delivered from the photodetector control circuit 54 notified of the teaching mode via the communication line or signal line 22 to the LED control circuit 43.

Once all LEDs complete emission of light, the photodetector control circuit 54 or controller 25 recognizes that the first projecting portion 21A interrupts the third and fourth optical axes, and the projecting portion 21B interrupts the seventh and eighth optical axes. In response, as shown in Fig. 21, the controller 25 or photodetector control circuit 54 automatically makes in the basic operational sequence shown in Fig. 12: a first blank necessary for emission from one of the LEDs of the first sub light emitting device 14 for the third optical axis (illustrated as the optical axis No. 3') after the emission timing of one of the LEDs of the main light emitting device 11 for the third axis (illustrated as the optical axis No. 3); and a second blank necessary for emission from the other LED of the first sub light emitting device 14 for the fourth optical axis (illustrated as the optical axis No. 4') after the emission timing of the LED of the main light emitting device 11 for the fourth optical axis (illustrated as the optical axis No. 4). Additionally, the controller 25 or photodetector control circuit 54 automatically generates a new operational sequence for activating the first sub light emitting device 14 at timings corresponding to the first and second blanks.

Additionally as shown in Fig, 21, the controller 25 or photodetector control circuit 54 automatically makes: a third blank necessary for emission from one of the LEDs of the second sub light emitting device 32 for the seventh optical axis (illustrated as the optical axis No. 7') after the emission timing of one of the LEDs of the seventh axis (illustrated as the optical axis No. 7); and a fourth blank necessary for emission of the other LED of the second sub light emitting device 32 for the eighth optical axis (illustrated as the optical axis No. 8') after the emission timing of the LED of the main light emitting device 11 for the eighth optical axis (illustrated as the optical axis No. 8). Additionally, the controller 25 or photodetector control circuit 54 generates a new operational sequence for activating the second sub light emitting device 32 at the timings corresponding to the third and fourth blanks. As a result, the multi-detection operational sequence shown in Fig. 21 is automatically generated.

It will be appreciated from the multi-detection operational sequence of Fig. 21 that substantially the same control is carried out as the first and/or second embodiments. For example, if the light beam from the main light emitting device 11 along the third optical axis is blocked by the optical obstacle S and the first sub light detecting device 13 cannot detect light, emission of the first sub light emitting device 14, for example, is prohibited. As a result, blockage of the third optical axis is acknowledged in the main light detecting device 12; this information is delivered to the controller 25; and an OFF or blockage signal is output from the controller 25 to the external device.

Also in the third embodiment, but in combination with a machine or equipment having a plurality of projecting portions 21A, 21B, in addition to the advantage that the safeguard system 100 can form a light curtain extending over a plane all around the projecting portion 21 of the press 20, the safeguard system has the advantage that the sub light detecting and emitting devices 13, 14, 31, 32 need not include detection circuits or signal processing circuits 57 (Fig. 9) equivalent to those in the first and second embodiments.

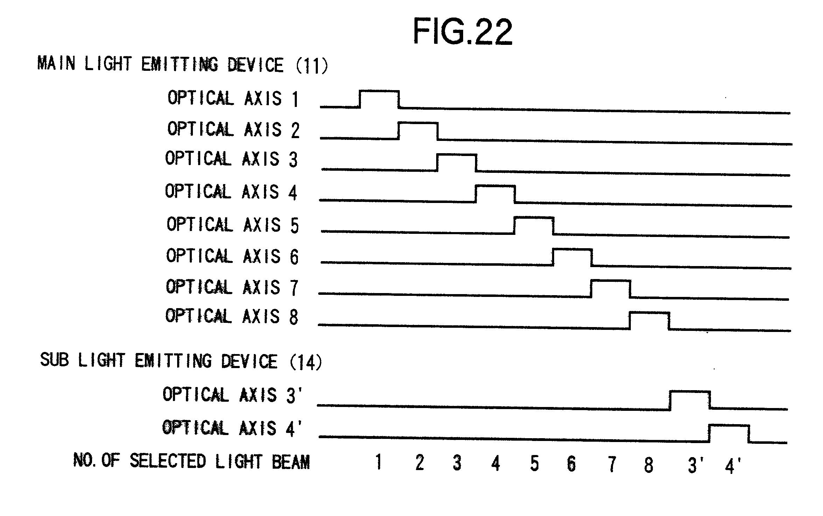

### Fourth Embodiment (Fig. 22)

Although the first to third embodiments are configured to incorporate operations of the sub light emitting device 14 among operations of the main light emitting device 11, such configuration may be modified. As shown in Fig. 22, the configuration is modified to bring about selective emission of LEDs of the sub light emitting device 14 after each full cycle of selective emission of LEDs of the main light emitting device 11. Although Fig. 22 only shows the operational sequence of one sub light emitting device 14, if a plurality of sub light emitting devices 14, 32 are provided like the third embodiment, emission of the second light emitting device 32 may be started after the first sub light emitting device 14 completes its emission.

A person skilled in the art will readily understand that an operational sequence for such control can be automatically generated by supplying the controller 25 or main light detecting device 12 with numbers of optical axes for placement of the sub light detecting and emitting devices 13, 14, 31, 32 as explained above.

When a part of human body intrudes through the light curtain, and if a selected photodetector of the first sub light detecting device 13 does not detect light, the controller 25 may control the first sub light emitting device 14 not to emit from the associated LED. As a result, the main light detecting device 12 does not detect light, and therefore, the main light detecting device 12 can confirm the information indicating that interference has occurred in the light curtain.

In regard to sequential, selective activation of the light emitting and detecting elements contained in the main light emitting and detecting devices 11, 12, clock generating circuits may be provided in the main light emitting device 11 and the main light detecting device 12. These clock generating circuits are used for activating the LEDs and photodetectors in the main light emitting and detecting devices 11, 12 sequentially and synchronously at predetermined timings.

Heretofore, some preferred embodiments of the invention have been explained. In the explanation of these embodiments, in regard to the optical axes in which the sub light detecting and emitting devices 13, 14, 31, 32 are placed, it is the principle that, when any optical obstacle intrudes between the main light emitting device 11 and the sub light detecting device 13 or 31, prohibition and interruption of the expected operation of an LED of an associated sub light emitting device 14, 32 results in informing the main light detecting device 12 of the intrusion of the optical obstacle. In other words, regarding the third optical axis, for example, the beam between the main light emitting device and the sub light detecting device 13 and the light beam between the sub light emitting device 14 and the main light detecting device 12 are regarded as a single light beam of the third optical axis to carry out the necessary signal processing.

As an alternative, regarding the third optical axis, for example, the sub light emitting device 14 may be activated for emission even when an optical obstacle intrudes between the main light emitting device 11 and the sub light detecting device 13. In this case, a blockage signal may be supplied from the sub light detecting device 13 to the controller 25, and after the controller 25 confirms the blockage signal, it may output an OFF signal to an external device. Alternatively, the sub light detecting 13 may supply a blockage signal to the main light detecting device (for the first embodiment), and after the main light detecting device 12 confirms the blockage signal, it may output an OFF signal to the external device. Alternatively, the sub light detecting device 13 may supply a blockage signal to the main light detecting device 12 via the controller 25 (for the second embodiment), and after the main light detecting device 12 confirms the blockage signal, it may supply the information to the controller 25 such that the controller 25 outputs a blockage or OFF signal to the external device.

It is to be understood that although the present invention has been described with regard to preferred embodiments thereof, various other embodiments and variants may occur to those skilled in the art, which are within the scope and spirit of the invention, and such other embodiments and variants are intended to be covered by the following claims.

The text of Japanese priority application no. 2001-241619 filed August 9, 2001 is hereby incorporated by reference.

## Claims

1. A multi-beam photoelectric safeguard system (100) for outputting a blockage signal toward an external device, the blockage signal indicating any optical blockage of any of light beams forming a light curtain by intrusion of an optical obstacle into the light curtain, comprising:
a main light emitting device (11) having a plurality of light emitting elements aligned in an array at equal intervals;
a main light detecting device (12) having a plurality of photodetectors equal in number to said plurality of light emitting elements and aligned in an array at equal intervals;
a sub light detecting device (13) disposed between said main light emitting device and said main light detecting device, and having at least one light photodetector capable of detecting a light beam from said main light emitting device;
a sub light emitting device (14) disposed between said main light emitting device and said main light detecting device, and having at least one light emitting element capable of emitting light toward said main light detecting device;
the light curtain including a main detection area (15) defined between said main light emitting device (11) and said main light detecting device (12) to detect any optical obstacle therein, a first sub detection area (16) defined between said main light emitting device (11) and said sub light detecting device (13) to detect any optical obstacle therein, and a second sub detection area (17) defined between said sub light emitting device (14) and said main light detecting device (12) to detect any optical obstacle therein; and
a blockage signal indicative of optical blockage of any of the light beams being output toward said external device when any optical obstacle intrudes in at least one of the main detection area, the first sub detection area and the second sub detection area.

2. A multi-beam photoelectric safeguard system according to claim 1, wherein said main light detecting device (12) includes therein:
a signal processing circuit (57) for detecting blockage of at least one optical axis of the light curtain; and
an output circuit (58) for receiving a signal from said signal processing circuit and outputting said blockage signal toward said external device.

3. A multi-beam photoelectric safeguard system according to any one of the preceding claims, wherein said main light emitting device (11) includes therein:
a signal processing circuit (57) for detecting blockage of at least one optical axis of the light curtain; and
an output circuit (58) for receiving a signal from said signal processing circuit and outputting said blockage signal toward said external device.

4. A multi-beam photoelectric safeguard system according to claim 1, further comprising:
a controller (25) for substantially controlling an exchange of signals among said main light emitting device, said main light detecting device, said sub light detecting device and said sub light emitting device.

5. A multi-beam photoelectric safeguard system according to claim 4, wherein said controller includes therein:
a signal processing circuit (57) for detecting blockage of at least one optical axis of the light curtain; and
an output circuit (58) for receiving a signal from said signal processing circuit and outputting said blockage signal toward said external device.

6. A multi-beam photoelectric safeguard system according to any one of the preceding claims, wherein a plurality of said sub light detecting devices (13) and a corresponding number of said sub light emitting devices (14) are provided.

7. A multi-beam photoelectric safeguard system according to any one of the preceding claims, wherein said sub light emitting device is prevented from emitting light when the optical obstacle intrudes in a sub detection area between said main light emitting device and said sub light detecting device.

8. A multi-beam photoelectric safeguard system (100) for outputting a blockage signal toward an external device, the blockage signal indicating any optical blockage that is detected in a light curtain including light beams along multiple optical axes, comprising:
a main light emitting device (11) having a plurality of light emitting elements aligned in an array at equal intervals;
a main light detecting device (12) disposed in an opposed relation with said main light emitting device, and having a plurality of photodetectors equal in number to said light emitting elements and aligned in an array at equal intervals;
a sub light detecting device (13) disposed in an opposed relation with said main light emitting device, and having at least one photodetector capable of detecting a light beam from said main light emitting device;
a sub light emitting device (14) disposed in an opposed relation with said main light detecting device on an optical axis common to that where said sub light detecting device is disposed, and having at least one light emitting element capable of emitting a light beam toward said main light detecting device;
the light curtain including a main detection area (15) defined between said main light emitting device (11) and said main light detecting device (12) to detect any optical obstacle therein, a first sub detection area (16) defined between said main light emitting device (11) and said sub light detecting device (13) to detect any optical obstacle therein, and a second sub detection area (17) defined between said sub light emitting device (14) and said main light detecting device (12) to detect any optical obstacle therein; and
a signal processing circuit (57) for detecting blockage of at least one of the light beams forming the light curtain and for outputting a blockage signal toward said external device indicative of the blockage.

9. A multi-beam photoelectric safeguard system according to claim 8, wherein a plurality of said sub light detecting devices and a corresponding number of said sub light emitting devices are provided.

10. A multi-beam photoelectric safeguard system (100) for supplying a blockage signal toward an external device upon an optical blockage of at least one light beam forming a multi-beam light curtain, comprising:
a main light emitting device (11) having a plurality of light emitting elements aligned at equal intervals;
a main light detecting device (12) having a plurality of photodetectors equal in number to said light emitting elements and aligned at equal intervals;
a sub light detecting device (13) disposed on a plane common to the light curtain, and having at least one light photodetectors capable of detecting a light beam from said main light emitting device;
a sub light emitting device (14) disposed on a plane common to the light curtain, and having at least one light emitting element capable of emitting a light beam toward said main light detecting device;
the light curtain including a main detection area (15) defined between said main light emitting device (11) and said main light detecting device (12) to detect any optical obstacle therein, a first sub detection area (16) defined between said main light emitting device (11) and said sub light detecting device (13) to detect any optical obstacle therein, and a second sub detection area (17) defined between said sub light emitting device (14) and said main light detecting device (12) to detect any optical obstacle therein; and
a control means for controlling said main light emitting device and said main light detecting device according to a basic operational sequence to selectively activate associated light emitting elements and photodetectors at predetermined regular intervals for a predetermined duration of time, said control means modifying said basic operational sequence for controlling said main light emitting device and said main light detecting device into a modified operational sequence by getting information about at least one optical axis forming the first and second sub detection areas, said control means adding timings for operating said sub light detecting device and said sub light emitting device, and controlling said main light emitting device, said main light detecting device, said sub light detecting device and said sub light emitting device according to the modified operational sequence.

11. A multi-beam photoelectric safeguard system according to claim 10, wherein a plurality of said sub light detecting devices and a corresponding number of said sub light emitting devices are provided.

12. A multi-beam photoelectric safeguard system according to any one of claims 10 to 11 wherein said sub light emitting device is prohibited to emit light when an optical obstacle intrudes into the first sub detection area defined between said main light emitting device and said sub light detecting device.

13. A multi-beam photoelectric safeguard system (100) comprising:
a main light emitting device (11) having a plurality of light emitting elements aligned at equal intervals;
a main light detecting device (12) having a plurality of photodetectors equal in number to said light emitting elements and aligned at equal intervals;
a sub light detecting device (13) disposed on a plane common to the light curtain, and having at least one light photodetectors capable of detecting a light beam from said main light emitting device;
a sub light emitting device (14) disposed on a plane common to the light curtain, and having at least one light emitting element capable of emitting light toward said main light detecting device;
the light curtain including a main detection area (15) defined between said main light emitting device and said main light detecting device to detect any optical obstacle therein, a first sub detection area (16) defined between said main light emitting device and said sub light detecting device to detect any optical obstacle therein, and a second sub detection area (17) defined between said sub light emitting device and said main light detecting device to detect any optical obstacle therein;
a signal processing circuit (57) for detecting blockage of at least one of the light beams forming the light curtain and for outputting a blockage signal toward said external device when a blockage is detected; and
a control means for controlling said main light emitting device and said main light detecting device according to a basic operational sequence to selectively activate associated light emitting elements and photodetectors at predetermined regular intervals for a predetermined duration of time, the control means modifying a basic operational sequence for controlling said main light emitting device and said main light detecting device into a modified operational sequence by getting information about at least one optical axis forming the first and second sub detection areas, the control means adding timings for operating said sub light detecting device and said sub light emitting device and for controlling said main light emitting device, said main light detecting device, said sub light detecting device and said sub light emitting device according to said modified operational sequence.

14. A multi-beam photoelectric safeguard system according to claim 13, wherein a plurality of said sub light detecting devices and a corresponding number of said sub light emitting devices are provided.

15. A multi-beam photoelectric safeguard system according to any one of claims 13 to 14, wherein said sub light emitting device is prohibited to emit light when an optical obstacle intrudes into the first sub detection area defined between said main light emitting device and said sub light detecting device.

16. A multi-beam photoelectric safeguard system (100) using a light curtain formed by light beams emitted from light emitting elements arranged in an array at regular intervals in a main light emitting element (11) and detected by a corresponding number of photodetectors in a main light detecting device (12) to supply a blockage signal to an external device upon optical blockage of any of the light beams by intrusion of an object into the light curtain, comprising:
a sub light detecting device (13) disposed on a plane common to the light curtain, and having at least one light photodetectors capable of detecting a light beam from said main light emitting device;
a sub light emitting device (14) disposed on a plane common to the light curtain to share the common optical axes with said sub light detecting device, and having at least one light emitting element capable of emitting light toward said main light detecting device; and
said main light emitting device, said sub light detecting device, said sub light emitting device and said main light detecting device defining sub detection areas for detecting any optical obstacle therein.

17. A multi-beam photoelectric safeguard system (100) using a light curtain formed by light beams emitted from light emitting elements arranged in an array at regular intervals in a main light emitting element (11) and detected by a corresponding number of photodetectors in a main light detecting device (12) to supply a blockage signal to an external device upon optical blockage of any of the light beams by intrusion of an object into the light curtain, comprising:
an output circuit contained in at least one of said main light emitting device and said main light detecting device to generate a blockage signal toward an external device;
a sub light detecting device (13) disposed on a plane common to the light curtain, and having at least one light photodetector capable of detecting a light beam from said main light emitting device, said sub light detecting device defining a first sub detection area (16) extending therefrom to said main light emitting device for detecting any optical obstacle therein;
a sub light emitting device (14) disposed on a plane common to the light curtain to share common optical axes with said sub light detecting device, and having at least one light emitting element capable of emitting light toward said main light detecting device, said sub light emitting device defining a second detection area (17) extending therefrom to said main light detecting device for detecting any optical obstacle therein; and
a communication line connecting said sub light emitting device and said main light detecting device to send an emission command signal to said sub light emitting device to have it emit a light beam when said sub light detecting device detects a light beam from said main light emitting device.

18. A multi-beam photoelectric safeguard system (100) using a light curtain formed by light beams emitted from light emitting elements arranged in an array at regular intervals in a main light emitting element and detected by a corresponding number of photodetectors in a main light detecting device to supply a blockage signal to an external device upon optical blockage of any of the light beams by intrusion of an object into the light curtain, comprising:
a controller containing therein an output circuit for generating a blockage signal toward an external device;
a sub light detecting device (13) disposed on a plane common to the light curtain, and having at least one light photodetector capable of detecting a light beam from said main light emitting device, said sub light detecting device defining a first sub detection area extending therefrom to said main light emitting device for detecting any optical obstacle therein;
a sub light emitting device (14) disposed on a plane common to the light curtain to share the common optical axes with said sub light detecting device, and having at least one light emitting element capable of emitting light toward said main light detecting device, said sub light emitting device defining a second detection area extending therefrom to said main light detecting device for detecting any optical obstacle therein; and
a communication line connecting said main light emitting device, said main light detecting device, said sub light detecting device and said light emitting device to each other to transfer information about optical blockage in the main detection area and the first and second sub detection areas to said controller.

19. A multi-beam photoelectric safeguard system (100) comprising:
at least one sub light detecting device (13) placed on a plane common to that of a light curtain made of parallel beams emitted from a main light emitting device (11) toward a main light detecting device (12) at one side of an interfering object that is interfering with the light curtain, and capable of detecting at least one of the light beams from said main light emitting device;
a sub light emitting device (14) equal in number to said sub light detecting device, said sub light emitting device being placed to share a common light axis with said sub light detecting device at the other side of said interfering object and capable of emitting a light beam of said common optical axis toward said main light detecting device;
the light curtain including a main detection area (15) made of full extensions of optical axes between said main light emitting device and said main light detecting device to detect any optical obstacle therein, and sub detection areas (16, 17) made of sectional extensions of at least one of said optical axes between said main light emitting device and said sub light detecting device and between said sub light emitting device and said main light detecting device, to detect any optical obstacle at opposite sides of said interfering object.

20. A method for detecting an optical obstacle in a multi-beam photoelectric safeguard system for outputting a blockage signal toward an external device, the blockage signal indicating optical blockage by intrusion of an optical obstacle into a light curtain made up of multi-beam light beams, comprising:
preparing a main light emitting device having a plurality of light emitting elements aligned in an array at equal intervals;
preparing a main light detecting device having a plurality of photodetectors equal in number to the light emitting elements and aligned in an array at equal intervals;
preparing a sub light detecting device disposed between the main light emitting device and the main light detecting device, and having at least one light photodetector capable of detecting a light beam from the main light emitting device;
preparing a sub light emitting device disposed between the main light emitting device and the main light detecting device, and having at least one light emitting element capable of emitting light toward the main light detecting device;
defining a main detection area for detecting the optical obstacle by means of the main light emitting device and the main light detecting device;
defining a first sub detection area for detecting the optical obstacle by means of the main light emitting device and the sub light detecting device;
defining a second sub detection area for detecting the optical obstacle by means of the sub light emitting device and the main light detecting device; and
outputting a blockage signal toward an external device indicating optical blockage based on intrusion of the optical obstacle into at least one of the main detection area, the first sub detection area and the second sub detection area.

21. A method for detecting an optical obstacle in a multi-beam photoelectric safeguard system for outputting a blockage signal toward an external device indicating optical blockage by intrusion of an optical obstacle into a light curtain made up of multi-beam light beams, comprising:
preparing a main light emitting device having a plurality of light emitting elements aligned in an array at equal intervals;
preparing a main light detecting device having a plurality of photodetectors equal in number to the light emitting elements and aligned in an array at equal intervals;
preparing a sub light detecting device disposed between the main light emitting device and the main light detecting device, and having at least one light photodetectors capable of detecting a light beam from the main light emitting device;
preparing a sub light emitting device disposed between the main light emitting device and the main light detecting device, and having at least one light emitting element capable of emitting light toward the main light detecting device;
defining a main detection area for detecting the optical obstacle by means of the main light emitting device and the main light detecting device;
defining a first sub detection area for detecting the optical obstacle by means of the main light emitting device and the sub light detecting device;
defining a second sub detection area for detecting the optical obstacle by means of the sub light emitting device and the main light detecting device;
outputting a blockage signal toward the external device when the main light detecting device does not receive a light beam due to intrusion of an optical obstacle into at least one of the main detection area, the first sub detection area and the second sub detection area; and
prohibiting the sub light emitting device to emit light when the sub light detecting device does not detect a light beam due to intrusion of an optical obstacle into the first sub detection area, and outputting a blockage signal toward the external device in response to non-reception of a light beam by the main light detecting device at a predetermined timing.

22. A method for detecting an optical obstacle in a multi-beam photoelectric safeguard system for outputting a blockage signal toward an external device indicating optical blockage by intrusion of an optical obstacle into a light curtain made up of multi-beam light beams, comprising:
preparing a main light emitting device having a plurality of light emitting elements aligned in an array at equal intervals;
preparing a main light detecting device disposed in an opposed relationship with the main light emitting device and having a plurality of photodetectors equal in number to the light emitting elements and capable of detecting light beams from the main light emitting device, at least one of the main light emitting device and the main light detecting device including an output circuit for outputting a blockage signal toward the external device;
preparing a sub light detecting device disposed between the main light emitting device and the main light detecting device, and having at least one light photodetector capable of detecting a light beam from the main light emitting device;
preparing a sub light emitting device disposed between the main light emitting device and the main light detecting device, and having at least one light emitting element capable of emitting a light beam toward the main light detecting device;
connecting the main light emitting device, the main light detecting device, the sub light detecting device and the sub light emitting device with a communication line;
defining a main detection area for detecting the optical obstacle between the main light emitting device and the main light detecting device;
defining a first sub detection area for detecting the optical obstacle between the main light emitting device and the sub light detecting device;
defining a second sub detection area for detecting the optical obstacle between the sub light emitting device and the main light detecting device, and the main detection area, the first sub detection area and the second sub detection area forming a full detection area for the light curtain; and
supplying blockage detection information to the output circuit via the communication line upon detection of any optical obstacle in the detection area.
